# EUROPEAN PATENT APPLICATION

(11) **EP 2 930 576 A1**
(43) Date of publication of application: **14.10.2015**
(21) Application number: 14164027.6
(22) Date of filing: 09.04.2014
(51) Int. Cl.: G05B 19/418

(54) **Controlling a manufacturing plant with a MES system**

(71) Applicant: Siemens Aktiengesellschaft, 80333 München (DE)
(72) Inventor: Bardini, Matteo, 16137 Genova (IT); Camera, Fabrizio, 15069 Serravalle Scrivia (IT)
(74) Representative: Maier, Daniel Oliver

(57) **Abstract**

A process and a system for controlling a manufacturing plant with a MES system, through the execution of a given workflow meeting given customer requirements, the invention comprising: a) providing an application for modelling a given representation of the plant through a set of equipment objects (EQ) and through at least one workflow; the equipment objects being enabled to expose at least one public interface (PI); each public interface being enabled to expose a set of callable elements (ME, AT); the invention further comprising at engineering time: b) defining a set of public interfaces usable by the workflow; c) defining a given workflow according to given customer requirements, said given workflow comprising a set of given callable elements exposed by given public interfaces; d) defining a given set of equipment objects, each one exposing at least one public interface; the equipment object being characterized by internal entities; e) for each specific equipment object, associating to the specific callable elements of the public interface exposed by the specific equipment object the corresponding internal entities of the equipment object; the invention further comprising at runtime: f) executing the given workflow by doing: f1) for each given callable element exposed by the given public interfaces of the given workflow, selecting, according to a given selection criterion, an equipment object (EQ) exposing the corresponding given public interface exposing the given callable element; f2) for each given callable element comprised in the given workflow, using the corresponding given callable element exposed by the corresponding given interface of the previously selected equipment object.

## Description

The present invention relates to a process and to a system for controlling a manufacturing plant with a MES system according to the preamble of claims 1 and 8 respectively.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

The Siemens Corp. offers a broad range of MES products, under its SIMATIC® product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95 or S95.

The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems developed by software suppliers is to provide manufacturing companies (the customers) with tools for measuring and controlling production activities with the aim of boosting profitability, increasing productivity, improving quality and process performance to manufacturing plants.

As used herein, a software application is a set of software components developed by software developers to perform some useful actions within a MES system, e.g. monitoring values coming from plant process or controlling a plant device.

Typically, at engineering or configuration time, system engineers or system integrators flexibly customize MES applications according to the specific manufacturing plant requirements.

Instead, at runtime, MES applications are utilized by end- users who may be plant operators or line responsible personnel.

The system engineers, during the configuration phase, are required to define logics intended as a set of operations that are running on the MES platform in order to control manufacturing plant operations. With the term logics, in the MES field, it is typically meant a set of functionalities or operations executed on the MES system.

During configuration, system engineers typically use an application, herein after called plant designer, to represent the manufacturing plant in a digital manner. The plant is modeled through an object oriented architecture where equipment objects are the MES entities representing the equipment pieces of the plant. Moreover, the system engineers are required to define through the plant designer the needed plant logics, where a logic is generically defined as an automated procedure for executing a given operation; e.g., automation logics (e.g. through PLCs), logics on the product material, logics for order management, logics for line automation and so on.

In known plant modeling techniques, system engineers usually select an equipment object and define on it logics specific for the selected equipment object.

Unfortunately, such techniques suffer the drawbacks of being of difficult reusability and error prone.

It is desirable instead that system engineers be able to define logics which are independent from the specific equipment object so that such logics may conveniently be reusable for other equipment objects. The advantage of having logics independent from the plant model and/or equipment object is especially relevant if one takes into account that it is very complex to manage a large number of equipment objects having several custom parts.

In fact, in the condition of needing to design a plant composed by a great amount of equipment objects, e.g. hundreds or more, in case each equipment object exposes a large set of methods, attributes and events, the management of equipment objects is unfortunately very likely to become burdensome.

As used herein, with the term workflow it is meant a set of ordered steps for executing a logical operation; where a step may be a logic performing a well-defined task or a call to another workflow.

It is therefore the aim of the present invention to overcome the above mentioned drawbacks, in particular by providing a process and a system for controlling a manufacturing plant with a MES system, wherein the logics of the workflow are decoupled from the implementation of a specific equipment object.

The aforementioned aim is achieved by a process and a system for controlling a manufacturing plant with a MES system, through the execution of a given workflow meeting given customer requirements, the invention comprising the following:
a) providing an application for modelling a given representation of the manufacturing plant through a set of equipment objects and through at least one workflow, said application hereinafter called plant designer; the equipment objects being enabled to expose at least one public interface; each public interface being enabled to expose a set of callable elements;
   the invention further comprising the following actions to be performed at engineering time through the plant designer:
b) defining a set of public interfaces usable by the workflow;
c) defining a given workflow according to given customer requirements, said given workflow comprising a set of given callable elements (ME, AT) exposed by given public interfaces;
d) defining a given set of equipment objects, each one exposing at least one public interface; the equipment object being characterized by internal entities;
e) for each specific equipment object, associating to the specific callable elements of the public interface exposed by the specific equipment object the corresponding internal entities of the equipment object;
   the invention further comprising the following action to be performed at runtime:
f) executing the given workflow by performing the following:
   f1) for each given callable element exposed by the given public interfaces of the given workflow, selecting, according to a given selection criterion, an equipment object exposing the corresponding given public interface exposing the given callable element;
   f2) for each given callable element comprised in the given workflow, using the corresponding given callable element exposed by the corresponding given interface of the previously selected equipment object.

In invention embodiments, wherein the callable elements may preferably be methods and the internal entities may be internal logics.

In invention embodiments, the callable elements may conveniently be attributes and the internal entities may be properties.

In invention embodiments, where the callable elements may preferably be a combination of methods and attributes and the internal entities are accordingly internal logics or properties.

In invention embodiments, the internal logics may be scripts, plugins or any combination thereof.

In invention embodiments, action c) is performed after action d) or e).

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Embodiments of the invention enable to decouple the definition of the plant model in term of equipment objects from the execution of the workflow.

Embodiments of the invention enable to decouple the definition of the workflow at engineering time from its implementation at run-time.

With embodiments of the invention, equipment objects are provided with public interfaces which are decoupled from the equipment specific internal implementation.

Embodiments of the invention enable writing the workflow in a reusable manner. In fact, the workflow is designed to be public interface based and not any more equipment object based. Thus all the production workflows that require a specific equipment capability can be defined by utilizing the specific corresponding public interface.

The workflow logics gain a higher degree of flexibility and, advantageously, with embodiments of the invention, even equipment objects having different natures might be enabled to perform common actions.

This can conveniently reduce the amount of workflow logics to be developed for a specific project, since the re-use rate is higher.

Embodiments of the invention enable to solve the technical problem of the keeping constraint, i.e. ensuring that an equipment object have a specific required functionality without requiring the usage of the classical inheritance concept, but instead by enforcing the exposition of a specific public interface by the equipment object.

With embodiments of the present invention, by having the workflow logics decoupled from the equipment object, both the "bottom-up" and the "top-down" designing approaches might conveniently be performed:
- in the bottom-up approach: the internal elements of the equipment objects are developed first; then, the plant model is designed with a given production workflow using the public interfaces exposed by the equipment objects;
- in the top down approach: at first, the plant model is designed with a given production workflow specifying the required workflow logics; then the internal elements of the equipment objects are developed in order to fulfill the workflow requirements.

The proposed invention enables to decouple the workflow logics from the specific equipment object implementation, in order to develop them separately. This feature enables, as seen, a top-down plant design, where the internal logics to be executed at runtime are not considered relevant until the final phase.

Furthermore, embodiments of the invention allow performing code refactoring operations in a simpler way. In fact, the internal elements of a specific equipment object can be rewritten without needing to modify the workflow and the public domain of the specific equipment object.

Embodiments of the invention achieve a separation of the public domain from the private domain in designing equipment objects via a pattern of public interfaces.

The set of public interfaces acts as an abstraction layer separating the equipment object private domain from its exposed public one.

In fact, a public interface of the equipment object is conveniently decoupling its description part (public domain) from its execution part (private domain). The public interface can be used at engineering time during the plant modeling phase in terms of production workflow without thinking in terms of the implemented internal logics/characteristics which will be then executed at runtime.

With embodiments of the invention, the same workflow may advantageously be executed, at run time by any equipment object, which is exposing the required interfaces according to the equipment object selection criteria.

The invention will now be described in preferred but not exclusive embodiments with reference to the accompanying drawings, wherein:
- Figure 1: is a class diagram schematically representing the public interface model according to an embodiment of the present invention.
- Figure 2: is an interaction diagram schematically representing how the modules are architecturally interacting with each other according to two example embodiments of the present invention.

At least some embodiments of the present invention address the above described issue in which a process or system is controlling a manufacturing plant with a MES system, through the execution of a given workflow meeting given customer requirements. The workflow is herein defined as a set of steps for executing a logical operation. The workflow operations need to satisfy the given customer requirements linked to the specific manufacturing plant to be controlled.

It is provided a software application called plant designer for modelling a given representation of the manufacturing plant through a set of equipment objects EQ and through at least one workflow. The equipment objects EQ are enabled to expose at least one public interface PI; each public interface being enabled to expose a set of callable elements ME, AT. A callable element may be either a method ME or an attribute AT, the method ME being a capability/functionality of the equipment object EQ exposing the public interface PI and the attribute AT being a characterization of the equipment object EQ exposing the public interface PI.

At engineering time, through the plant designer, the system engineer defines a set of public interfaces PI usable by the workflow.

At engineering time, through the plant designer, the system engineer defines a given workflow according to given customer requirements, the given workflow comprising a set of given callable elements ME, AT exposed by the given public interfaces PI. The callable elements ME,AT may be either methods ME or attributes AT or any combination thereof.

At engineering time, through the plant designer, the system engineer defines a given set of equipment objects EQ, each one exposing at least one public interface PI. The equipment objects EQ are characterized by internal entities IL, PI. The internal entities may be either internal logics or properties depending whether the callable elements are methods or attributes. The internal logics may be implemented as a set of scripts or conveniently as a plug-in. The plugin is a more complex entity than a script. In fact, the plugin is an entity per se' with its own life-cycle and it may comprise data and have a memory. It is a third entity. The plug-in might be characterized by its own methods, attributes and/or events; whilst the script can be seen as a functionality of the equipment objects.

It is noted that with the term internal logics is herein defined a logic which is private and thus not visible from the workflow. Moreover, the internal logics are usually lower level logics than the workflow logics which are instead higher level.

At engineering time, through the plant designer, the system engineer associates, for each specific equipment object EQ, to the specific callable elements ME, AT of the public interface PI exposed by the specific equipment object the corresponding internal entities IL, PR of the equipment object. In other words, at the equipment object level, it is created an association between the specific callable elements ME, AT and their corresponding internal elements IL,PR for run-time implementation when required.

It is noted that the system engineer in charge of defining the internal elements of the equipment objects may not be the same as the system engineer in charge of defining the given workflow as a set of calls to callable elements of the public interfaces, and the chronological order of such operations may vary. One system engineer has to create a link between the callable elements and the internal elements of the equipment object. Another or the same system engineer defines the workflow without requiring knowing how the callable elements are actually implemented.

At run time, an execution engine executes the given workflow by performing the following actions:
- for each given callable element ME,AT exposed by the given public interfaces of the given workflow, selecting, according to a given selection criterion, an equipment object EQ exposing the corresponding given public interface exposing the given callable element ME,AT;
- for each given callable element ME,AT comprised in the given workflow, using the corresponding given callable element ME,AT exposed by the corresponding given interface of the equipment object previously selected.

With the terms "using the corresponding given callable elements" it is meant the following:
- "invoking the methods", in the case where the callable elements are methods;
- "inspecting the attributes", in the case where the callable elements are attributes.

In an embodiment of the proposed invention, the execution engine may preferably comprise two different engines, a first engine that runs the high level logic, i.e. the workflow the workflow which is a high-level logical flow composed as a sequence of calls to callable elements of the public interfaces, and a second engine that an engine that runs the low level logic, e.g. internal logics, like the scripts or the logics inside the plug-ins.

The criteria used, by the execution engine, to select the equipment object EQ may be a variety of selection criteria. For example, one criterion could be selecting the equipment object which corresponds to the equipment piece which is less busy or the equipment piece which received a most recent maintenance.

During the engineering phase, the system engineers define the equipment objects EQ characterizing them with their internal elements, and the given workflows that will run on the plant. During the runtime phase, the given workflow is executed and the equipment object runtime information is updated accordingly.

It is noted that the operations to be performed during engineering phase, according to embodiments of the present invention, can also advantageously be performed at a phase called "online engineering" which is a phase which enabled to change the plant configuration at runtime, after the production has been started; e.g. in order to adapt the plant to a pick of request for a certain production line.

It is noted that the callable elements ME, AT of the public interfaces PI exposed by a specific equipment object EQ represent the public domain of the specific equipment object EQ whilst the internal elements IL, PR represent its private domain.

Hence, each equipment object EQ is described by two different levels, a public level constituted by the set of public interfaces and a private domain/body constituted by the equipment internal elements. All such internal elements are considered private and therefore not visible from outside, but they can be the source for the public interface elements visible from outside.

Furthermore, it is noted that a single internal element can be the source for more than one public interface PI and that a given public interface PI can be exposed by one or more equipment objects EQ.

The set of public interfaces PI is seen from the system integrator who is defining the workflow. The private domain is seen from the system integrator whose task is to describe the equipment object and not seen by the system integrator whose task is to define the workflow. An example of a public interface can be a public interface called "Mixing_PI" and the private domain of the equipment object exposing this specific public interface "Mixing_PI" is defining how the mixing is actually implemented.

Each given public interface may expose one or more of the following elements:
- a set of methods ME: functionalities/capabilities that the equipment object which is exposing the given public interface is able to execute.
- a set of attributes AT: characterizations of the equipment
- events: notifications that something took place (e.g. the equipment is turned on) useful to be used by the workflow.

In embodiments of the invention, public interfaces may be preferably organized based on their scope, e.g. in functionality families like moving or mixing a material, equipment maintenance, equipment washing, equipment quality etc, e.g. there can be a public interface called "MaterialMovement_PI", "QualityManagement_PI", "Mixing_PI" etc.

The capabilities of equipment objects are exclusively exposed by the public interfaces and not by the equipment object itself. As a results, for example, a mixing workflow can be designed, based only on the assumption that a public interface called "Mixing_PI" exists, with a set of calls to the methods of the public interface "Mixing_PI".

It is noted that a public interface PI may also advantageously be seen as a manner of representing a constraint for a given equipment object to expose a given functionality or a given characterization.

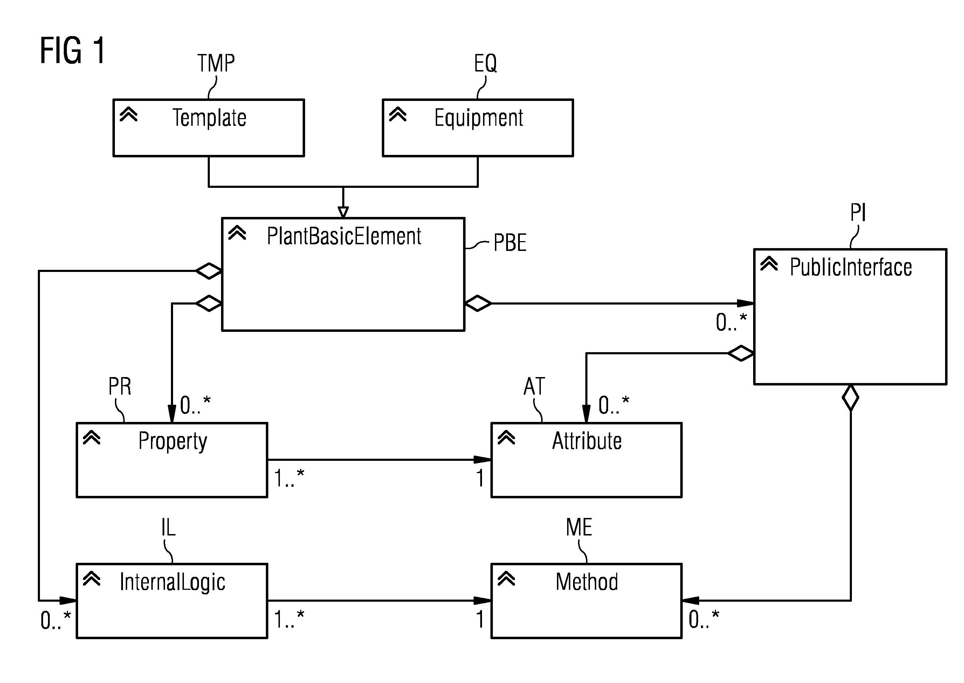

Figure1 is a UML (Unified Modeling Language) class diagram schematically representing the public interface model according to an embodiment of the present invention.

In an embodiment of the present invention, both an equipment object EQ and a template TMP may derive from a common entity that in the Figure 1 is called plant basic element PBE containing all the common information and capabilities which will be inherited: e.g. a set of public interfaces PI, a set of properties PR and a set of internal logics IL. Thus the plant basic element PBE can be seen as an abstract object from which the template TMP and the equipment object EQ may derive.

As in other known MES systems, system integrators are thus provided with two descripting levels for modeling, at engineering time, in a stepwise approach, the equipment entities which will be then executed at runtime:
- equipment template object level: the equipment template is an embryonic form of equipment object to be defined at engineering time in order to group family of equipment objects having similar characteristics;
- equipment object level: the equipment is defined at engineering time departing from the equipment template (whose characteristics are inherited) to generate/create the equipment object which will be executed at runtime.

The concept of having multiple properties PR or internal logics IL as source of a single public interface PI is described in Figure 1 by the connection between the property PR and an attribute AT and by the connection between the internal logic IL and the method ME. The properties PR store equipment status, e.g. the name or the version of the equipment object EQ. The properties might be used and modified by the internal logics IL which are functionalities allowing manipulating the equipment object EQ. Both the internal logic IL and the properties have a private scope, i.e. they cannot be seen or used by the workflow. In order to view and use them outside the equipment object scope, they should be exposed via attributes AT and methods ME: in particular, an attribute AT is the exposition of a property PR and a method ME is the exposition of an internal logic IL. Obviously, not all the internal elements should or need to be seen from the outside, for instance some properties PR are and should only be used inside the internal logic IL; for instance, for a mixer equipment object, outside the operator might see only a simplified frequency indicator, e.g. a scale from 1 to 10, however, internally, the equipment object is storing the frequency value expressed in Hertz.

Let us describe a simple explanatory example of an embodiment of the present invention where a given workflow of mixing operations needs to be defined and implemented.

Let us assume that a first system engineer defines the given workflow with a flow of calls to three methods called "Prepare_the_mixer_ME", "Mix_ME", "Empty_the_mixer_ME" exposed by a public interface called "Mixing1_PI":

A second system integrator has the task to define the private domain of an equipment object called "Mixer01_EQ" which is required to expose as public domain the previously mentioned public interface "Mixing1_PI" and, preferably, other typical public interfaces like for example "Maintanance_PI" and "Quality_PI". She/he has to define the internal elements of the equipment object "Mixer01_EQ" required to implement the three methods of the public interface "Mixing1_PI". She/he defines such internal elements with two internal logics IL implemented as two plugins, called "Move_material_PLG" and "Activate_mixer_PLG". She/he then defines the association between the three methods ME and the internal logic IL as follows:
- "Prepare_the_mixer_ME" is associated to plugin "Move_material_PLG" with a first set of parameters;
- "Mix_ME" is associated to plugin "Activate_mixer_PLG"
- "Empty_the_mixer_ME" is associated to plugin "Move_material_PLG" with a second set of parameters.

At run time, it is an execution engine that will make a selection, among the available equipment objects EQ which are exposing the public interface "Mixing1_PI", according to some predefined optimizing selection criteria, of the equipment object which will implement at run time the three methods called in the given workflow. For example, in this simple case the selected equipment object is "Mixer01_EQ". At run time, the execution engine will execute the workflow as by invoking such three methods of the selected equipment object "Mixer01_EQ"

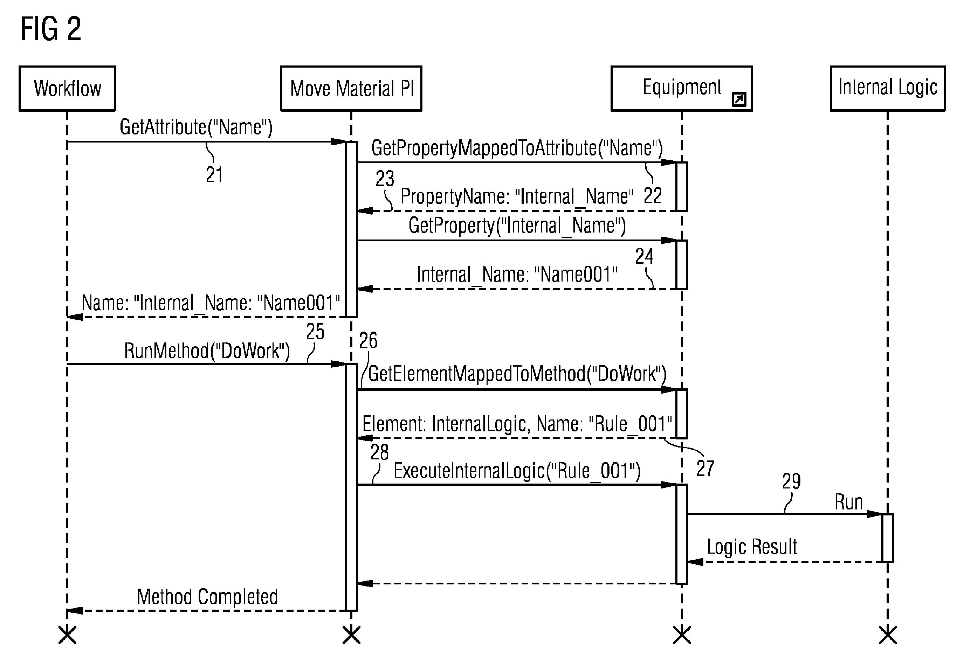

Figure 2 is a UML interaction diagram schematically representing how the different modules are architecturally interacting with each other according to two example embodiments of the present invention of two basic operations executable in the workflow.

The first operation, shown in the upper part, relates to an attribute inspection and the second one, shown in the lower part, relates to a method call.

In the attribute inspection example, the workflow asks for the value of the attribute "Name" 21. In the diagram it is represented as a method call, because generally an attribute inspection is never made directly, but mediated via an ad-hoc call that may preferably be hidden in an evolved software development kit. When the attribute "Name" is inspected, the request is passed first to the public interface "Move Material PI", which verifies if the attribute exists and is associated with a corresponding property 22,23. In case there is a property mapped with the attribute, the public interface "Move Material PI" asks 24 the equipment to retrieve its value "Name001", stored for example in memory or in a database.

In the second operation, the method call, the workflow asks for the execution of the method "DoWork" 25. For simplifying the diagram, it has been represented with a call to a faked method "RunMethod", but it can be simply solved by the used programming language. Like with the first example, first the mapped method is obtained 26,27, than the real logic is called 28. In this case, the call does not end at the equipment level but is propagated 29 to a third layer, called Internal Logic, where it is really executed.

## Claims

1. A process for controlling a manufacturing plant with a MES system, through the execution of a given workflow meeting given customer requirements,
the process comprising the following step:
a) providing an application for modelling a given representation of the manufacturing plant through a set of equipment objects (EQ) and through at least one workflow, said application hereinafter called plant designer; the equipment objects (EQ) being enabled to expose at least one public interface (PI); each public interface being enabled to expose a set of callable elements (ME, AT); the process further comprising the following steps to be performed at engineering time through the plant designer:
b) defining a set of public interfaces (PI) usable by the workflow;
c) defining a given workflow according to given customer requirements, said given workflow comprising a set of given callable elements (ME, AT) exposed by given public interfaces;
d) defining a given set of equipment objects (EQ), each one exposing at least one public interface (PI); the equipment object (EQ) being **characterized by** internal entities (IL, PR);
e) for each specific equipment object (EQ), associating to the specific callable elements (ME, AT) of the public interface (PI) exposed by the specific equipment object (EQ) the corresponding internal entities (IL, PR) of the equipment object;
the process further comprising the following step to be performed at runtime:
f) executing the given workflow by performing the following sub-steps:
f1) for each given callable element (ME,AT) exposed by the given public interfaces of the given workflow, selecting, according to a given selection criterion, an equipment object (EQ) exposing the corresponding given public interface exposing the given callable element (ME,AT);
f2) for each given callable element (ME,AT) comprised in the given workflow, using the corresponding given callable element (ME,AT) exposed by the corresponding given interface of the equipment object selected according to the previous sub-step.

2. The process according to claim 1, wherein the callable elements are methods (ME) and the internal entities are internal logics (IL).

3. The process according to claim 1, wherein the callable elements are attributes (AT) and the internal entities are properties (PR).

4. The process according to claim 1, wherein the callable elements are a combination of methods (ME) and attributes (AT) and the internal entities are accordingly internal logics (IL) or properties (PR).

5. The process according to claim 2 or 4 wherein the internal logics IL are scripts, plugins or any combination thereof.

6. The process according to any of the previous claims
wherein step c) is performed after step d) or e).

7. The process according to any of the previous **characterized in that** it is implemented in software.

8. A system for controlling a manufacturing plant with a MES system, through the execution of a given workflow meeting given customer requirements,
the system comprising:
a) means for providing an application for modelling a given representation of the manufacturing plant through a set of equipment objects (EQ) and through at least one workflow, said application hereinafter called plant designer; the equipment objects (EQ) being enabled to expose at least one public interface (PI); each public interface being enabled to expose a set of callable elements (ME, AT);
the system further comprising the following means of the plant designer to be used at engineering time:
b) mean for defining a set of public interfaces (PI) usable by the workflow;
c) mean for defining a given workflow according to given customer requirements, said given workflow comprising a set of given callable elements (ME, AT) exposed by given public interfaces;
d) mean for defining a given set of equipment objects (EQ), each one exposing at least one public interface (PI); the equipment object (EQ) being **characterized by** internal entities (IL, PR);
e) for each specific equipment object (EQ), mean for associating to the specific callable elements (ME, AT) of the public interface (PI) exposed by the specific equipment object (EQ) the corresponding internal entities (IL, PR) of the equipment object;
the system further comprising the following means to be used at run-time time:
f) means for executing the given workflow comprising the following means:
f1) for each given callable element (ME,AT) exposed by the given public interfaces of the given workflow, means for selecting, according to a given selection criterion,
an equipment object (EQ) exposing the corresponding given public interface exposing the given callable element (ME,AT);
f2) for each given callable element (ME,AT) comprised in the given workflow, means for using the corresponding given callable element (ME,AT) exposed by the corresponding given interface of the previously selected equipment object.
